# EUROPÄISCHE PATENTSCHRIFT

(11) **EP 2 190 080 B1**
(45) Veröffentlichungstag und Bekanntmachung des Hinweises auf die Patenterteilung: **06.11.2013**
(21) Anmeldenummer: 09014334.8
(22) Anmeldetag: 17.11.2009
(51) Int. Cl.: H01R 43/048, H02G 1/12, H01R 107/00, H01R 43/28, H01R 43/055, H01R 9/03, H01R 43/05

(54) **Vorrichtung zum Crimpen oder Abisolieren einer Ader eines mehradrigen Kabels**
Device for crimping or isolating a wire of a multi-wire cable
Dispositif de sertissage et de dénudement d'un conducteur d'un câble à plusieurs fils

(30) Priorität: 20.11.2008 DE 102008058168
(43) Veröffentlichungstag der Anmeldung: 26.05.2010
(73) Patentinhaber: MD Elektronik GmbH, 84478 Waldkraiburg (DE)
(72) Erfinder: Mayer, Oswald, 84478 Waldkraiburg (DE); Lang, Walter, 84478 Waldkraiburg (DE)
(74) Vertreter: Hofmann, Ernst

(56) Entgegenhaltungen:
- EP-A1- 0 889 561
- EP-A2- 1 258 960
- WO-A1-2005/104300
- US-A- 4 183 383
- US-A- 4 796 358

## Beschreibung

Die Erfindung betrifft eine Vorrichtung zum Crimpen oder Abisolieren zumindest einer Ader eines mehradrigen Kabels, gemäß dem Anspruch 1.

Derartige Vorrichtungen dienen zum Bearbeiten von beispielsweise vieradrigen geschirmten Kabeln, die häufig nach dem so genannten Stem-Vierer-Prinzip aufgebaut sind. Durch die neuartige Vorrichtung ist es nunmehr auf einfache Weise möglich derartige Kabel schnell und zuverlässig zu verarbeiten. Entsprechende Kabel werden nicht selten in sehr hohen Stückzahlen verarbeitet, also abisoliert oder gecrimpt. Aus diesem Grund besteht der permanente Wunsch die entsprechenden Herstellungsvorrichtungen fertigungstechnisch zu verbessern. So werden unter anderem Anstrengungen unternommen derartige Fertigungsprozesse zu automatisieren. Zudem muss natürlich sichergestellt werden, dass die bearbeiteten Kabel reproduzierbar eine gute Qualität aufweisen.

Aus der EP 889 561 A1 ist beispielsweise eine Crimpvorrichtung bekannt, bei der mehrere einadrige Kabel gecrimpt werden können.

Die EP 1 258 960 A2 offenbart eine Vorrichtung zum Abisolieren eines mehradrigen Kabels, bei dem sämtliche Adern des Kabels in eine Ebene gebracht werden, bevor diese abisoliert werden.

Die vorbekannten Vorrichtungen haben unter anderem den Nachteil, dass die dadurch hergestellten Kabel nur vergleichsweise schwierig weiterverarbeitet werden können, insbesondere in automatischen Prozessen.

Der Erfindung liegt daher die Aufgabe zugrunde, eine Vorrichtung zu schaffen, mit welcher mehradrige Kabel überaus präzise gecrimpt oder abisoliert werden können, was bezüglich nachfolgender Weiterverarbeitungsprozesse Vorteile aufweist.

Diese Aufgabe wird erfindungsgemäß durch die Merkmale des Anspruches 1 gelöst.

Erfindungsgemäß umfasst die Vorrichtung zum Crimpen oder Abisolieren einer Ader eines mehradrigen Kabels ein erstes Werkzeug und ein zweites Werkzeug, wobei zum Crimpen oder Abisolieren der Ader das erste Werkzeug in einer z-Richtung relativ zum zweiten Werkzeug in eine Bearbeitungsposition bewegbar ist. Die Vorrichtung ist so konfiguriert, dass diese einen Freiraum aufweist, in den in der Bearbeitungsposition eine weitere Ader aufnehmbar ist, und welcher in der z-Richtung versetzt zur ersten Ader angeordnet ist.

Als Bearbeitungsposition kann im Folgenden diejenige Position der Werkzeuge innerhalb der Vorrichtung verstanden werden, in der das Crimpen oder das Abisolieren der Adern vorgenommen wird. Die weitere Ader, die vom so genannten Freiraum aufgenommen ist, wird in dieser Position nicht bearbeitet, also nicht gecrimpt oder abisoliert.

Insbesondere ist unter dem Begriff Ader ein mit einer elektrisch isolierenden Ummantelung versehener Leiter zu verstehen, welcher sich von mit Lack isolierten Einzellitzen unterscheidet.

Mit Vorteil ist der Freiraum als eine Ausnehmung im ersten Werkzeug und / oder im zweiten Werkzeug ausgestaltet. Dabei können die Ausnehmungen eine Fase aufweisen, so dass der Rand der Ausnehmungen quasi trichterförmig ausgestaltet ist und so die Enden der Adern leichter in die Ausnehmung einführbar sind.

Die erfindungsgemäße Vorrichtung hat sich als besonders vorteilhaft erwiesen für Kabel mit mindestens vier Adern, welche in unterschiedlichen Ebenen angeordnet sind, wie dies beispielsweise bei einem Stem-Vierer-Kabel der Fall ist. Insbesondere können mehrere Adern gleichzeitig gecrimpt oder abisoliert werden. In diesem Zusammenhang kann es zum simultanen Bearbeiten zweier Adern des mehradrigen Kabels vorteilhaft sein, wenn das erste Werkzeug und / oder das zweite Werkzeug zwei Einbuchtungen aufweist, so dass das betreffende Werkzeug von geometrischen Geraden, welche in einer y-Richtung orientiert sind, durch diese Einbuchtungen hindurch durchdringbar sind, wobei die zwei Einbuchtungen in einer x-Richtung zueinander versetzt angeordnet sind. Die x-Richtung ist mit einer Richtungskomponente orthogonal zu den y- und z-Richtungen orientiert. Mit anderen Worten verlaufen die Einbuchtungen so, dass eine entsprechend ausgerichtete Gerade durch diese hindurch läuft. Mit Vorteil können die Einbuchtungen und damit auch die betreffenden geometrischen Geraden parallel zueinander orientiert sein.

In weiterer Ausgestaltung der Erfindung weisen das erste Werkzeug oder das zweite Werkzeug zwei als Ausnehmungen ausgestaltete Freiräume auf, so dass das betreffende Werkzeug von weiteren Geraden, welche auch in der y-Richtung orientiert sind, durch diese Freiräume hindurch durchdringbar sind, wobei die zwei Freiräume in einer x-Richtung zueinander versetzt angeordnet sind. Die x-Richtung ist dabei mit einer Richtungskomponente orthogonal zu den y- und z-Richtungen orientiert.

Mit Vorteil weist die Vorrichtung ein Führungselement auf zur Leitung der jeweiligen Ader in eine vorgegebene Position. Insbesondere kann die Vorrichtung zum gleichen Zweck zwei Führungselemente aufweisen, wobei das erste Führungselement mit einer orthogonalen Richtungskomponente relativ zum zweiten Führungselement orientiert ist. Gemäß einer bevorzugten Bauweise der Vorrichtung ist das erste Führungselement relativ zum zweiten Führungselement orthogonal orientiert. Es hat sich als vorteilhaft herausgestellt, wenn das Führungselement keilförmig, konisch oder mit entsprechenden Rundungen ausgestaltet ist, wobei dann der dünnwandigere Bereich des Führungselements vom zweiten Werkzeug abgewandt angeordnet ist.

Weiterhin kann eine entsprechende Vorrichtung zum Crimpen der Adern ein Führungselement umfassen, welches einen Schlitz zur Aufnahme eines Trägerstreifens aufweist, wobei der Trägerstreifen aneinander gereihte Crimpkontakte umfasst.

Mit Vorteil kann die Vorrichtung zum Crimpen der Adern ein zweites Werkzeug aufweisen, das zwei Teile umfasst, wobei die Teile relativ zueinander in z-Richtung verschieblich angeordnet sind und auf jeweils auf einem Kraftsensor ruhen.

Ferner kann die Vorrichtung zum Crimpen der Adern einen so genannten Abschneider zum Abtrennen einzelner Crimpkontakte vom Trägerstreifen aufweisen. Der Abschneider umfasst eine Öffnung und ist relativ zum zweiten Werkzeug so angeordnet, dass der als Ausnehmung ausgestaltete Freiraum im zweiten Werkzeug und die Öffnung im Abschneider von einer geometrischen Geraden, welche in einer y-Richtung orientiert ist, durchdringbar sind. Entsprechend sind also der Abschneider und das zweite Werkzeug bezüglich der y-Richtung bzw. der Axialrichtung des Kabels versetzt angeordnet.

Mit Vorteil weist der Abschneider ein Führungselement auf zur Leitung der jeweiligen Ader in eine vorgegebene Position. Dabei kann die Vorrichtung zum Crimpen so ausgestaltet sein, dass durch das Führungselement eine Ader in einen als Ausnehmung ausgestalteten Freiraum und eine andere Ader in die Einbuchtung des zweiten Werkzeugs leitbar ist.

In weiterer Ausgestaltung der Erfindung kann das zweite Werkzeug zwei als Ausnehmungen ausgestaltete Freiräume und zwei Einbuchtungen aufweisen. Zudem kann dann der Abschneider zwei Führungselemente aufweisen zur Leitung von Adern in die Ausnehmungen bzw. Freiräume und zur Leitung von weiteren Adern in die Einbuchtungen des zweiten Werkzeugs. Dabei kann das erste Führungselement mit einer orthogonalen Richtungskomponente relativ zum zweiten Führungselement orientiert sein. Insbesondere kann auch in diesem Fall das erste Führungselement relativ zum zweiten Führungselement orthogonal orientiert sein.

Mit Vorteil umfasst bei einer Vorrichtung zum Crimpen der Adern das erste Werkzeug zwei Teile bzw. Stempel, wobei die Teile zu deren Justierung vor dem Crimpen relativ zueinander in z-Richtung verschieblich angeordnet sind.

In Weiterbildung der Erfindung umfasst eine Vorrichtung zum Crimpen der ersten und der weiteren Ader zwei Crimpstationen. Jede der Crimpstationen weist ein erstes Werkzeug und ein zweites Werkzeug auf. Zum Crimpen einer der Adern ist das jeweilige erste Werkzeug einer Crimpstation in der z-Richtung relativ zum jeweiligen zweiten Werkzeug der gleichen Crimpstation in eine Bearbeitungsposition bewegbar. Weiterhin ist die Crimpstation zum Crimpen der ersten Ader so konfiguriert ist, dass diese einen Freiraum aufweist, wobei der Freiraum als eine Ausnehmung im zweiten Werkzeug ausgestaltet ist, in den in der Bearbeitungsposition die weitere Ader aufnehmbar ist, und welcher in der z-Richtung versetzt zur ersten Ader angeordnet ist. Zudem ist die andere Crimpstation zum Crimpen der weiteren Ader so konfiguriert, dass diese einen Freiraum aufweist, der als eine Ausnehmung im ersten Werkzeug ausgestaltet ist, in den in der Bearbeitungsposition die erste Ader aufnehmbar ist, und welcher in der z-Richtung versetzt zur weiteren Ader angeordnet ist.

Durch die erfindungsgemäße Vorrichtung ist es nun möglich Kabel bereitzustellen, deren abisolierte oder gecrimpte Adern für eine einfache, insbesondere automatisierte, Weiterverarbeitung besonders gut geeignet sind. Denn dadurch, dass die Adern für das Crimpen oder das Abisolieren nicht nachhaltig gebogen werden müssen, können nunmehr extrem genaue Bearbeitungen vorgenommen werden. Die Adern werden unter Verwendung der erfindungsgemäßen Vorrichtung allenfalls geringfügig elastisch verformt und kehren danach wieder in ihre Ausgangsform zurück. Bisher mussten die einzelnen Adern, je nach individueller Stellung zueinander zunächst einmal gesammelt bzw. "eingefangen" und zurückgebogen werden, bevor eine Weiterverarbeitung möglich war. Beispielsweise müssen im Zuge der Weiterverarbeitung die einzelnen Adern in ein Isolierteil positionsgenau gesteckt werden. Da die Adern nach einer Bearbeitung in einer herkömmlichen Crimp- bzw. Abisoliervorrichtung nach zufälligem Muster im Raum positioniert sind, muss in der Regel ein manuelles und daher vergleichsweise aufwändiges zurückbiegen der Adern vorgenommen werden. In diesem Zusammenhang ist zu berücksichtigen, dass die Verformungen bzw. Biegungen der Adern, wie sie bei einer herkömmlichem Crimp- bzw. Abisoliervorrichtung erfolgen, stets Verformungsremanenzen zur Folge haben, deren Umfang allerdings nicht vorhersehbar ist und von vielen Parametern abhängt. Einer dieser Parameter ist beispielsweise die Temperatur der betreffenden Adern, die naturgemäß bei laufender Produktion schwankend sein kann.

Zudem eignet sich die erfindungsgemäße Vorrichtung besonders gut als Baueinheit einer halb- oder vollautomatischen Fertigungsanlage.

Vorteilhafte Ausbildungen der Erfindung entnimmt man den abhängigen Ansprüchen.

Weitere Einzelheiten und Vorteile der ertindungsgemäßen Vorrichtung ergeben sich aus der nachfolgenden Beschreibung mehrerer Ausführungsbeispiele anhand der beiliegenden Figuren. Die Richtungsangaben in der Beispielsbeschreibung beziehen sich auf die jeweils in den Figuren eingezeichneten Koordinatensysteme.

Es zeigen die
- Figur 1 a: eine perspektivische Ansicht einer Vorrichtung zum Crimpen gemäß einem ersten Ausführungsbeispiel,
- Figur 1b: eine Rückansicht der Vorrichtung zum Crimpen gemäß dem ersten Ausführungsbeispiel,

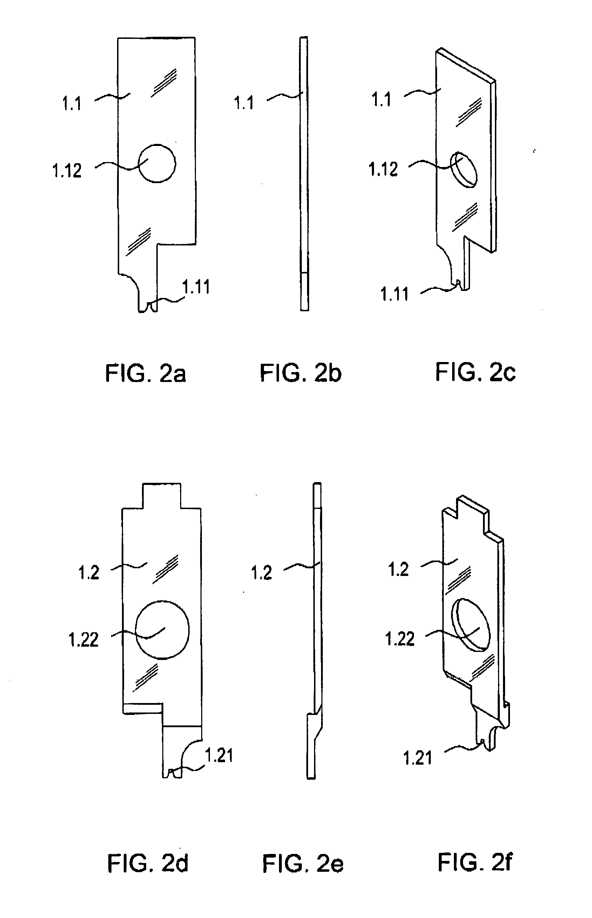

- Figuren 2a, 2b, 2c: Ansichten eines ersten Stempels als Teil des ersten Werkzeuges gemäß dem ersten Ausführungsbeispiel,
- Figuren 2d, 2e, 2f: Ansichten eines zweiten Stempels als Teil des ersten Werkzeuges gemäß dem ersten Ausführungsbeispiel,
- Figuren 3a, 3b, 3c: Ansichten eines ersten Ambossteils des zweiten Werkzeuges gemäß dem ersten Ausführungsbeispiel,
- Figur 3d: eine perspektivische Ansicht eines zweiten Ambossteils des zweiten Werkzeuges gemäß dem ersten Ausführungsbeispiel,
- Figur 4: eine perspektivische Ansicht eines Abschneiders gemäß dem ersten Ausführungsbeispiel,
- Figuren 5a, 5b, 5c: Ansichten eines Abschneiders gemäß einem zweiten Ausführungsbeispiel,
- Figur 6a: eine perspektivische Ansicht einer Vorrichtung zum Crimpen gemäß einem dritten Ausführungsbeispiel,
- Figur 6b: eine perspektivische Ansicht eines ersten Stempels als Teil des ersten Werkzeuges gemäß dem dritten Ausführungsbeispiel.
- Figur 6c: eine perspektivische Ansicht eines zweiten Stempels als Teile des ersten Werkzeuges gemäß dem dritten Ausführungsbeispiel,
- Figur 6d: eine perspektivische Ansicht eines ersten Ambossteils des zweiten Werkzeuges gemäß dem dritten Ausführungsbeispiel,
- Figur 6e: eine perspektivische Ansicht eines Abschneiders gemäß dem dritten Ausführungsbeispiel,
- Figur 7a: eine perspektivische Ansicht einer Vorrichtung zum Crimpen gemäß einem vierten Ausführungsbeispiel,
- Figur 7b: eine perspektivische Ansicht eines Abschneiders gemäß dem viertem Ausführungsbeispiel,

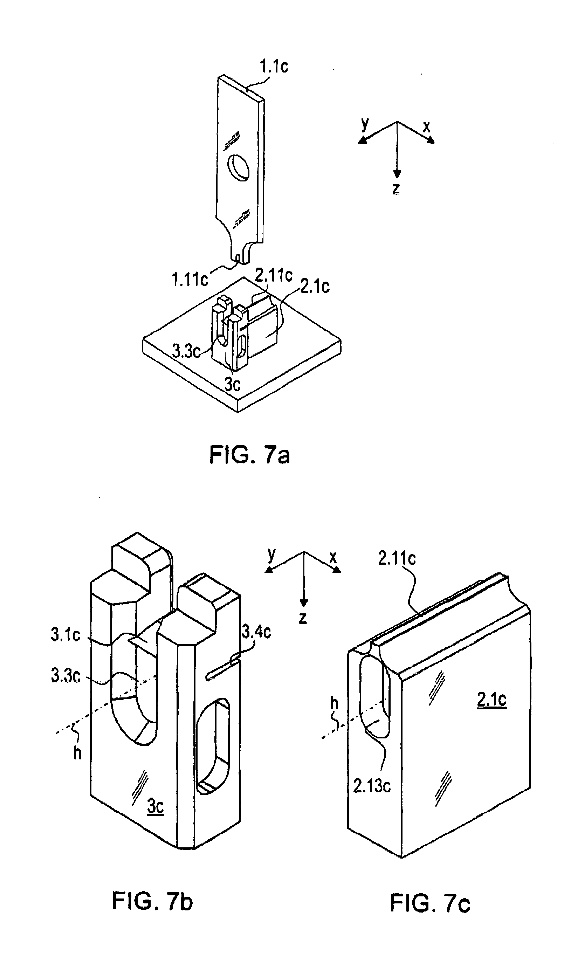

- Figur 7b: eine perspektivische Ansicht des Ambosses gemäß dem viertem Ausführungsbeispiel,

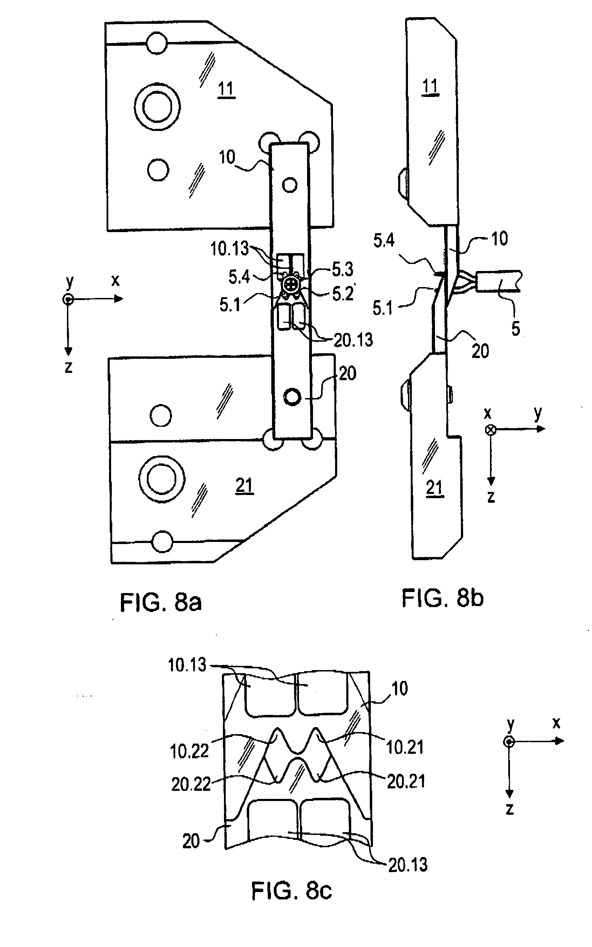

- Figuren 8a, 8b: Seitenansichten einer Vorrichtung zum Abisolieren gemäß einem fünften Ausführungsbeispiel,
- Figur 8c: eine Detailansicht der Vorrichtung zum Abisolieren gemäß dem fünften Ausführungsbeispiel.

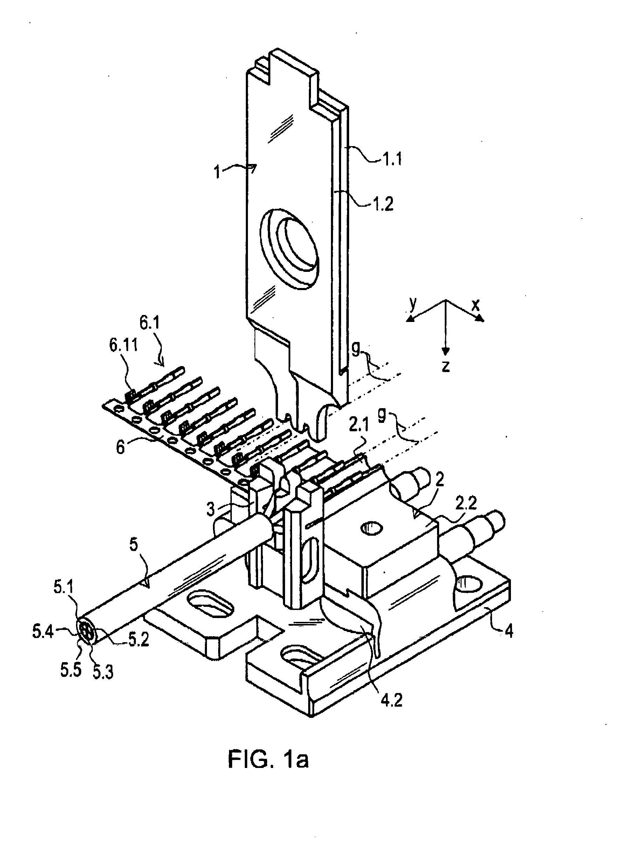

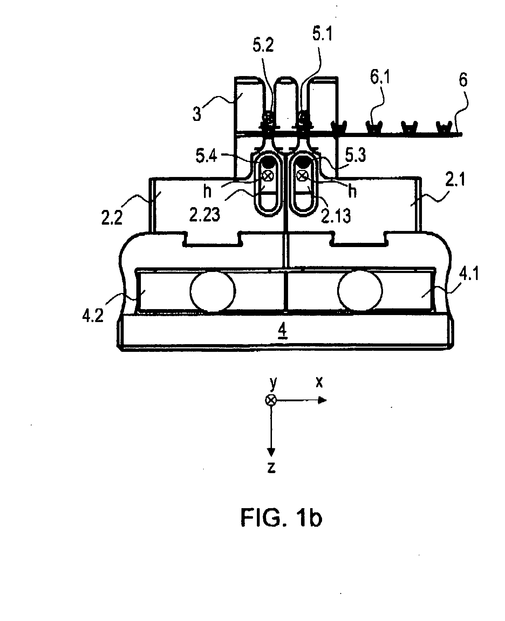

In den Figuren 1 a und 1b ist gemäß dem ersten Ausführungsbeispiel der Erfindung eine Vorrichtung zum Crimpen von Adern 5-1 bis 5.4 eines mehradrigen, hier vieradrigen, Kabels 5 dargestellt. Die Adern 5.1 bis 5.4 sind von einer in den Figuren nicht näher dargestellten Schirmung umgeben und außen von einem isolierenden Mantel 5.5 umschlossen. Das Kabel 5 ist an einem Ende abgemantelt, so dass dort die Adern 5.1 bis 5.4 zur Bearbeitung freigelegt sind.

Die Vorrichtung umfasst als erstes Werkzeug einen Crimper 1, welcher mit einem zweiten Werkzeug, hier als Amboss 2 bezeichnet, zusammenwirkt. Weiterhin umfasst im vorgestellten Ausführungsbeispiel die Vorrichtung auch einen so genannten Abschneider 3 zum Abtrennen von Crimpkontakten 6.1, welche Crimplaschen 6.11 aufweisen, von einem Trägerstreifen 6 einer Bandware. In den Figuren sind im Übrigen x-, y-, z-Raumkoordinatenrichtungen zur Erläuterung der relativen Ausrichtung von Vorrichtungskomponenten dargestellt. Der Abschneider 3 ist demnach in y-Richtung versetzt zum Amboss 2 an einem Auflager 4 befestigt. Der Amboss 2 ist zweiteilig ausgestaltet und umfasst folglich zwei Ambossteile 2.1, 2.2. Die Ambossteile 2.1, 2.2 ruhen ebenfalls auf dem Auflager 4, welches zwei Kraftsensoren 4.1, 4.2 umfasst.

Gemäß den Figuren 1 a und 2a bis 2f besteht der Crimper 1 aus zwei Teilen, nämlich einem ersten Stempel 1.1 und einem zweiten Stempel 1.2. Die beiden Stempel 1.1, 1.2 weisen jeweils eine Einbuchtung 1.11, 1.21 auf, in die im Betrieb der Vorrichtung eine der Adern 5.1 bis 5.4 aufgenommen werden kann. Mit Hilfe der Bohrungen 1.12, 1.22 können die beiden Stempel 1.1, 1.2 miteinander verbunden werden, beispielsweise mit einer in den Figuren nicht näher dargestellten Schraube. Dabei ist der Außendurchmesser der betreffenden Schraube kleiner als der Innendurchmesser von zumindest einer der Bohrungen 1.12; 1.22. Auf diese Weise ist es möglich eine relative Verstellung der Stempel 1.1, 1.2 zueinander in z-Richtung zu erreichen, was für eine exakte Justierung der Vorrichtung vorteilhaft ist. Die Stempel 1.1, 1.2 sind im zusammengefügten Zustand so angeordnet, dass die Einbuchtungen 1.11, 1.21 in x-Richtung zueinander versetzt angeordnet sind.

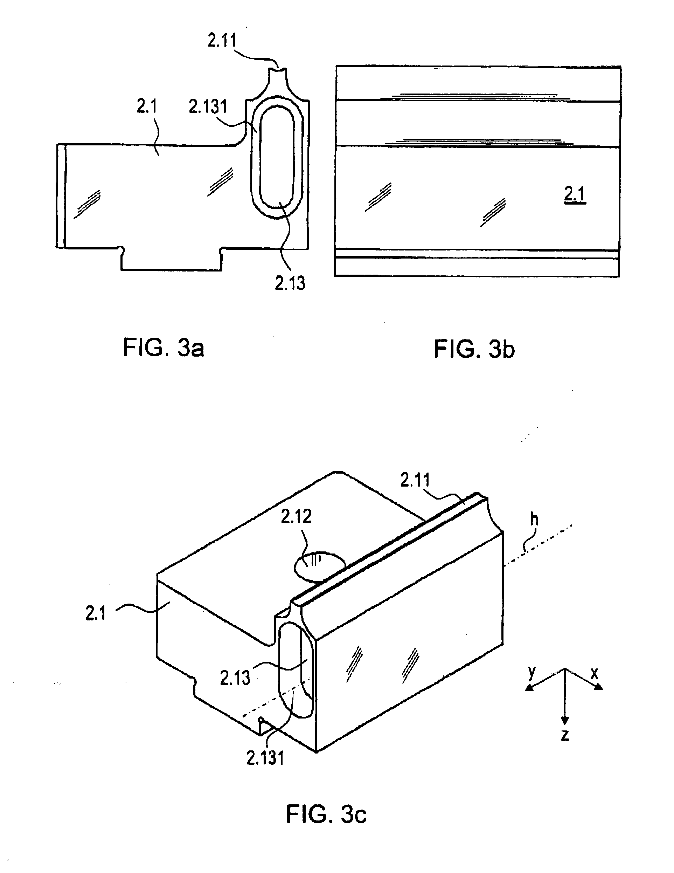

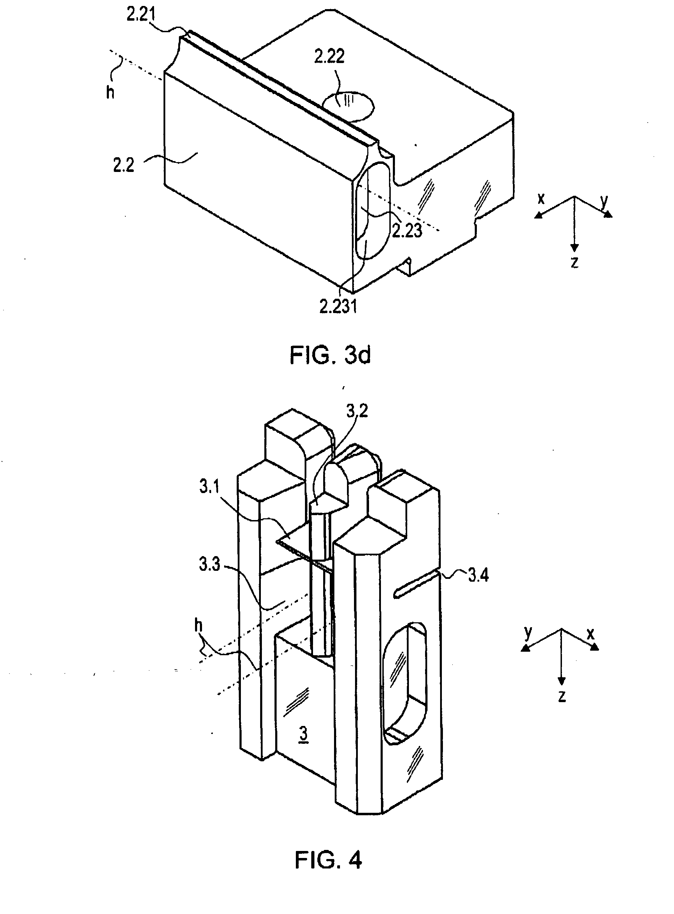

In den Figuren 3a bis 3c ist das erste Ambossteil 2.1 im Detail dargestellt. Das andere Ambossteil 2.2 weicht vom ersten Ambossteil 2.1 nur durch eine spiegelbildliche Geometrie ab und ist in der Figur 3d gezeigt. Die Ambossteile 2.1, 2.2 weisen demnach auch jeweils eine Einbuchtung 2.11, 2.21 auf und können mit Hilfe von Bohrungen 2.12, 2.22 am Auflager 4 befestigt werden. Weiterhin weist jeder der Ambossteile 2.1, 2.2 jeweils eine Ausnehmung 2.13, 2.23 auf, die jeweils mit einer umlaufenden Fase 2.131, 2.231 versehen ist. Im vorgestellten Ausführungsbeispiel sind die Ausnehmungen 2.13, 2.23 als Langlöcher ausgestaltet, welche den jeweiligen Ambossteil 2.1, 2.2 in y-Richtung vollständig durchdringen. Die Ausnehmungen 2.13, 2.23 sind hier überdies symmetrisch unterhalb, also symmetrisch in z-Richtung versetzt, bezüglich der jeweiligen Einbuchtung 2.11, 2.21 angeordnet.

Der Abschneider 3 weist gemäß den Figuren 1a und 4 eine Öffnung 3.3 auf, in welche in y-Richtung die Adern 5.1 bis 5.4 des Kabels 5 eingeführt werden können. Weiterhin umfasst der Abschneider 3 ein erstes keilförmiges Führungselement 3.1 und ein zweites keilförmiges Führungselement 3.2, wobei die beiden Führungselemente 3.1, 3.2 orthogonal zueinander angeordnet bzw. orientiert sind. Durch einen Spalt 3.4 kann der Trägerstreifen 6, an dem die Crimpkontakte 6.1 aneinandergereiht sind, geführt werden. Der Spalt 3.4 durchdringt hier den Abschneider 3 auch im Bereich des ersten Führungselements 3.1.

Der Crimper 1 und der Amboss 2 weisen jeweils zwei Einbuchtungen 1.11, 2.11; 1.21, 2.21 auf, die gemäß der Figur 1a von virtuellen Geraden g durchdrungen werden. Dabei sind die Geraden g in der y-Richtung orientiert und die zwei Einbuchtungen 1.11, 2.11; 1.21, 2.21 jeweils in x-Richtung zueinander versetzt angeordnet. Gleichfalls sind gemäß der Figur 1b und den Figuren 3c, 3d die Ambossteile 2.1, 2.2 von geometrischen Geraden h, welche in einer y-Richtung orientiert sind, durch die Ausnehmungen 2.13, 2.23 hindurch durchdringbar. Ebenso durchdringen die geometrischen Geraden h auch den Abschneider 3 im Bereich der Öffnung 3.3 (Figur 4).

Im Betrieb der Vorrichtung wird das zum Ende hin abgemantelte Kabel 5, dessen Adern 5.1 bis 5.4 bereits an deren Enden abisoliert sind, entgegen der y-Richtung (in der Figur 1 a von links kommend) in die Öffnung 3.3 des Abschneiders 3 eingeführt. Die abisolierten Enden der Adern 5.1 bis 5.4 werden dabei durch die Führungselemente 3.1, 3.2 sozusagen in vier Quadranten geleitet. Dabei werden die Adern 5.3, 5.4, welche unterhalb des ersten Führungselements 3.1 liegen in jeweils eine Ausnehmung 2.13, 2.23 des ersten Ambossteils 2.1 bzw. des zweiten Ambossteils 2.2 geschoben. Die Zuordnung in welches Ambossteil 2.1, 2.2 welche der Adern 5.3, 5.4 geleitet wird, wird durch das zweite Führungselement 3.2 vorgenommen. Auf diese Weise kann eine Verbiegung der Enden der Adern 5.3, 5.4 über den elastischen Bereich hinaus vermieden werden. Durch die geometrische Auslegung der Führungselemente 3.1, 3.2, insbesondere durch die gewählten Keilwinkel, kann für das betreffende Kabel 5 eine überaus exakte Position bezüglich der Eintauchtiefe in y-Richtung erreicht werden. Insbesondere stellen die Führungselemente 3.1, 3.2 gleichzeitig einen axialen Anschlag für das Kabel 5 dar. Dadurch ist es nun möglich, dass nur ein extrem kurzer Endbereich des Kabels 5 von seinem Mantel 5.5 befreit werden muss. Unterstützt wird dieser Effekt auch dadurch, dass am Endbereich des Mantels 5.5 eine metallische Crimphülse fest aufgebracht ist, so dass somit ein fester und präziser Anschlag für das Kabel 5 an den Führungselementen 3.1, 3.2 erreicht wird. So kann die betreffende Abmantellänge hier beispielsweise nur 7,5 mm betragen.

Diejenigen Adern 5.1, 5.2, welche vom ersten Führungselement 3.1 nach oben entgegen der z-Richtung geführt werden und vom zweiten Führungselement 3.2 in die Position zur Einbuchtung 2.11 des ersten Ambossteils 2.1 bzw. zur Einbuchtung 2.21 des zweiten Ambossteils 2.2 in der Figur 1 a nach links bzw. rechts geleitet werden, werden dann dem Crimpvorgang unterzogen. In diesem Zusammenhang wird der Crimper 1 in z-Richtung über einen vordefinierten Hub hinweg relativ zum Amboss 2 von einer Ruheposition in einen Bearbeitungsposition bzw. in eine Crimpposition bewegt. Bei diesem Prozess werden die Crimplaschen 6.11 plastisch so verformt, dass sich diese fest um die jeweilige Ader 5.1, 5.2 schließen. Unmittelbar darauffolgend werden durch eine in z-Richtung verlaufende Hubbewegung des Abschneiders 3 die jeweiligen Crimpkontakte 6.1 vom Trägerstreifen 6 abgetrennt. Die Abtrennung erfolgt durch eine Abscherung zwischen einer Kante des Schlitzes 3.4 und Kanten der Ambossteile 2.1, 2.2. Der Crimper 1 wird sodann wieder entgegen der z-Richtung von den Adern 5.1, 5.2 wegbewegt.

Im Zuge von Qualitätssicherungsmaßnahmen ist es erforderlich den Kraftverlauf auf den Amboss 2 während des Crimpvorgangs zu bestimmen, bzw. aufzuzeichnen. Damit dies bei der gezeigten Vorrichtung möglich ist, sind zwei Kraftsensoren 4.1, 4.2 vorgesehen. Die Ambossteile 2.1, 2.2 sind, wie bereits beschrieben, getrennt voneinander montiert und sind insbesondere in z-Richtung in gewissem Umfang unabhängig voneinander verschieblich angeordnet. Somit ist es möglich bei einem Crimpvorgang den jeweiligen Kraftverlauf für jede einzelne Ader 5.1, 5.2 zu bestimmen.

Sobald die Enden der beiden Adern 5.1, 5.2 entsprechend gecrimpt sind, wird das Kabel 5 in y-Richtung aus dem Amboss 2 und dem Abschneider 3 herausgezogen und um 180° um seine Längsachse (bzw. um die y-Achse) gedreht. Danach wird das Kabel 5 wieder zum Abschneider 3 hinbewegt, so dass die Adern 5.1 bis 5.4 wieder durch den Abschneider 3 hindurch geführt werden. Nun werden die Enden der Adern 5.1 bis 5.4 mit Hilfe der Führungselemente 3.1, 3.2 in die entsprechenden Positionen geleitet, so dass dann die bereits gecrimpten Adern 5.1, 5.2 in die Ausnehmung 2.13, 2.23 des ersten Ambossteils 2.1 bzw. des zweiten Ambossteils 2.2 geschoben werden. Die beiden anderen Adern 5.3, 5.4 werden dann analog zum oben beschriebenen Crimpprozess behandelt. Die Crimpung der Adern 5.1 bis 5.4 kann durch die im ersten Ausführungsbeispiel beschriebene Vorrichtung vollautomatisch durchgeführt werden.

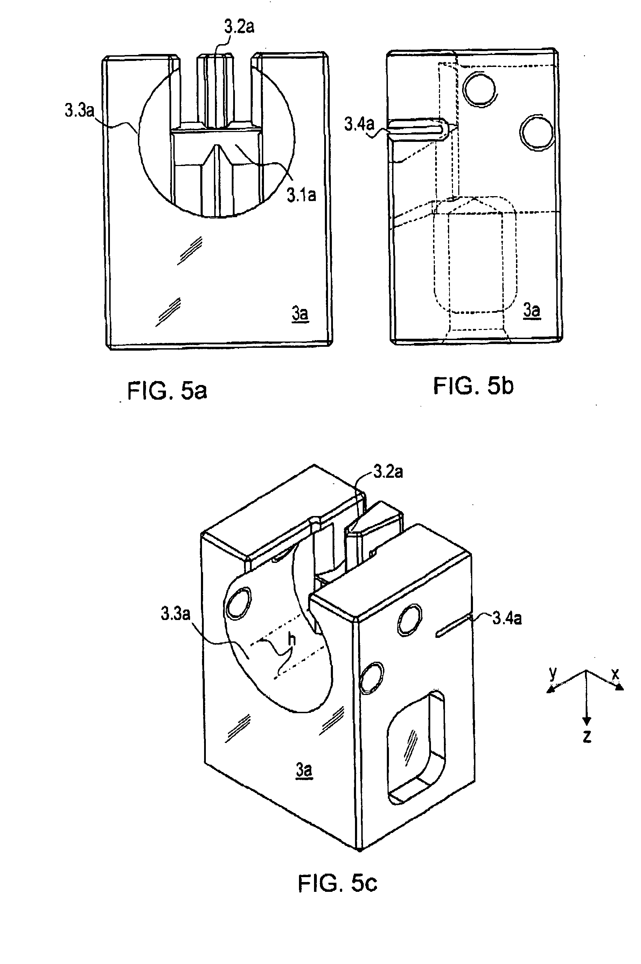

Im zweiten Ausführungsbeispiel wird statt des oben erläuterten Abschneiders 3 ein dazu modifizierter Abschneider 3a (Figuren 5a - 5c) verwendet, wobei ansonsten die übrigen Vorrichtungskomponenten wie im ersten Ausführungsbeispiel ausgestaltet sind. Der Abschneider 3a zeichnet sich insbesondere dadurch aus, dass er eine spezielle Geometrie der Öffnung 3.3a aufweist. Insbesondere wird die Öffnung 3.3a durch eine im Wesentlichen hohlzylindrische Wand berandet, wobei diese in z-Richtung zum Crimper 1 hin offen ist. Diese besondere Ausgestaltung des Abschneiders 3a ist insbesondere vorteilhaft, wenn eine halbautomatische Crimpung erfolgt, d. h. wenn die 180°-Drehung des Kabels 5 zwischen den beiden Crimpvorgängen von Hand vorgenommen wird. Durch die im Wesentlichen hohlzylindrische Wand wird das Kabel 5 umschlossen, so dass eine radiale Führung des Kabels 5 ermöglicht wird.

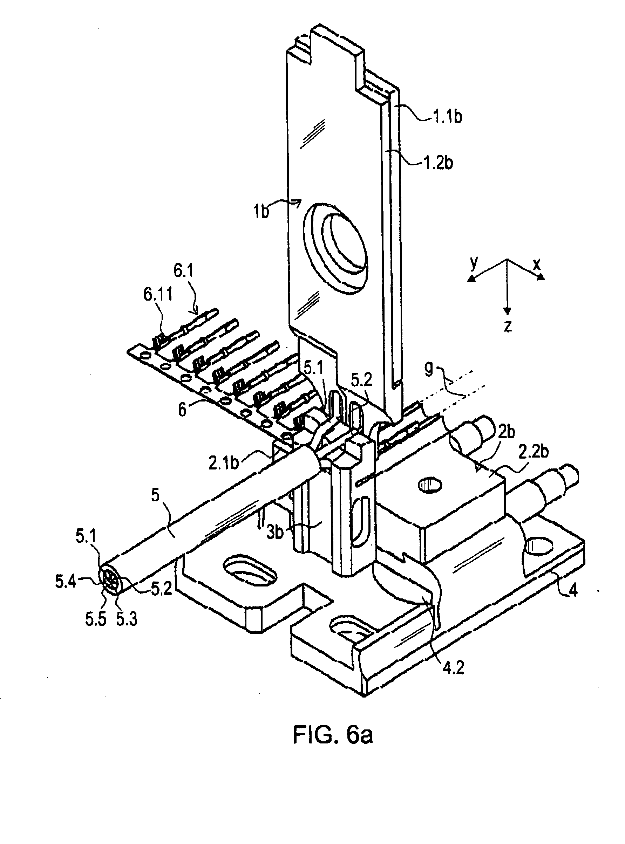

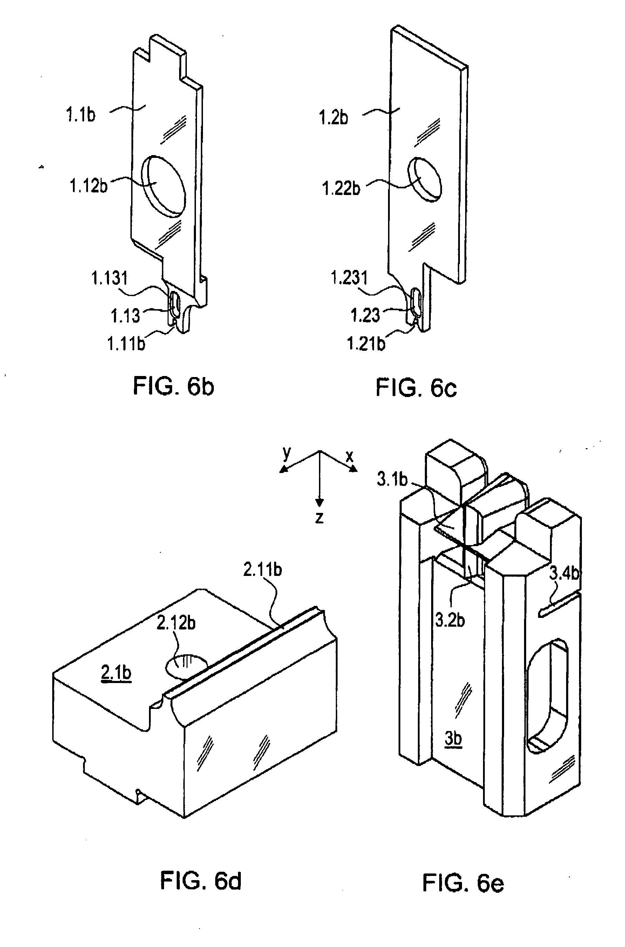

Das dritte Ausführungsbeispiel gemäß den Figuren 6a bis 6e weist ebenfalls einen Crimper 1b mit einem ersten Stempel 1.1b und einem zweiten Stempel 1.2b auf. Die beiden Stempel 1.1b, 1.2b haben jeweils eine Einbuchtung 1.11b, 1.21 b zur Aufnahme eines Paares der Adern 5.1 bis 5.4. Mit Hilfe von Bohrungen 1.12b, 1.22b können die beiden Stempel 1.1, 1.2 miteinander in z-Richtung justierbar, wie im ersten Ausführungsbeispiel, verbunden werden. Die Stempel 1.1 b, 1.2b sind im zusammengefügten Zustand so angeordnet, dass die Einbuchtungen 1.11, 1.21 in x-Richtung zueinander versetzt sind. Ferner weist jeder Stempel 1.1 b, 1.2b jeweils eine Ausnehmung 1.13, 1.23 auf, die jeweils mit einer umlaufenden Fase 1.131, 1.232 versehen ist. Im vorgestellten Ausführungsbeispiel sind die Ausnehmungen 1.13, 1.23 als Langlöcher ausgestaltet, welche den jeweiligen Stempel 1.1 b, 1.2b in y-Richtung vollständig durchdringen. Die Ausnehmungen 1.13, 1.23 sind hier überdies symmetrisch oberhalb, also symmetrisch entgegen der z-Richtung versetzt, bezüglich der jeweiligen Einbuchtung 1.11b. 1.21b angeordnet.

Wie im ersten Ausführungsbeispiel besteht auch hier der Amboss 2b aus zwei Ambossteilen 2.1b, 2.2b. Bezüglich des dritten Ausführungsbeispiels ist in der Figur 6d lediglich ein Ambossteil 2.1b dargestellt. Das andere Ambossteil 2.2b des dritten Ausführungsbeispiels ist nicht im Detail gezeigt, zumal dieses vom ersten Ambossteil 2.1b nur durch eine spiegelbildliche Geometrie abweicht. Das Ambossteil 2.1b weist auch eine Einbuchtung 2.11b auf und kann mit Hilfe einer Bohrung 2.12b am Auflager 4 befestigt werden. Im Gegensatz zu den Ambossteilen 2.1, 2.2 des ersten Ausführungsbeispiels weisen diejenigen des dritten Ausführungsbeispiels keine Ausnehmungen 2.11, 2.21 auf.

Der Abschneider 3b gemäß dem dritten Ausführungsbeispiel umfasst ebenfalls ein erstes keilförmiges Führungselement 3.1 b und ein zweites keilförmiges Führungselement 3.2b. Auch hier kann der Trägerstreifen 6 durch einen Spalt 3.4b geführt werden.

Die übrigen Vorrichtungskomponenten gemäß dem dritten Ausführungsbeispiel entsprechen denen des ersten Ausführungsbeispiels.

Wenn nun die vier Adern 5.1 bis 5.4 des Kabels 5 gecrimpt werden sollen, so wird dies auch mit der Anordnung gemäß dem dritten Ausführungsbeispiel in zwei Stufen vorgenommen. Beispielsweise werden zunächst die Adern 5.3 und 5.4 gecrimpt und darauffolgend die Adern 5.1 und 5.2. Im Zuge einer solchen Bearbeitung werden die Adern 5.1 bis 5.4 durch die Führungselemente 3.1b, 3.2b so geleitet, dass die zunächst nicht zu crimpenden Adern 5.1, 5.2 entgegen der z-Richtung geleitet werden, so dass die Enden der betreffenden Adern 5.1, 5.2 in die Ausnehmungen 1.13, 1.23 der Stempel 1.1b, 1.2b eintauchen. Die Ausnehmungen 1.13, 1.23 sind dabei bezüglich ihrer Ausdehnung in z-Richtung so dimensioniert, dass auch in der Ruhestellung der beiden Stempel 1.1 b, 1.2b die Enden der zunächst nicht zu crimpenden Adern 5.1, 5.2 in die Ausnehmungen 1.13, 1.23 einführbar sind.

Diejenigen Adern 5.3, 5.4, die im ersten Schritt gecrimpt werden sollen, werden durch die Führungselemente 3.1b, 3.2b auf die Einbuchtung 2.11b des ersten Ambossteils 2.1b geleitet und natürlich auch auf die nicht dargestellte Einbuchtung des zweiten Ambossteils.

In der Figur 6a ist die Vorrichtung zum Crimpen dargestellt, bei der der Crimper 1b relativ zum Amboss 2b in der z-Richtung in eine Bearbeitungsposition bewegt wurde. Wenn also die beiden Stempel 1.1 b, 1.2b in z-Richtung zu den Adern 5.3, 5.4 hin bewegt werden, findet eine Relativbewegung zwischen den nicht zu crimpenden Adern 5.1, 5.2 und den Stempeln 1.1b, 1.2b statt, wobei die nicht zu crimpenden Adern 5.1, 5.2 in den Ausnehmungen 1.13, 1.23 verbleiben. Prinzipiell werden dann die Adern 5.3, 5.4 wie im ersten Ausführungsbeispiel gecrimpt. Danach wird auch hier zunächst das Kabel 5 in y-Richtung aus der Vorrichtung herausgezogen und es wird dann eine 180°-Drehung des Kabels 5 vorgenommen, bevor es wieder in die Vorrichtung eingeschoben wird zur Crimpung der verbleibenden Adern 5.1, 5.2.

Als viertes Ausführungsbeispiel wird eine Crimpvorrichtung gemäß den Figuren 7a bis 7c gezeigt, die insbesondere zur Crimpung von zweiadrigen Kabeln geeignet ist. Entsprechend wird hier ein einteiliger Crimper 1.1c verwendet mit einer Einbuchtung 1.11c. Der Abschneider 3c umfasst gemäß den Figuren 7a und 7b eine Öffnung 3.3c und nur ein keilförmiges Führungselement 3.1c sowie einen Schlitz 3.4c zu Führung des Trägerstreifens. Der Amboss 2.1c ist hier einteilig ausgestaltet und weist eine Einbuchtung 2.11c und eine Ausnehmung 2.13c auf.

Das zweiadrige Kabel wird nun so in die Crimpvorrichtung gemäß dem vierten Ausführungsbeispiel eingelegt, dass eine Ader zwischen den Einbuchtungen 1.11c, 2.11c des Crimpers 1.1c bzw. des Ambosses 2.1c zu liegen kommt, während die zweite Ader in die Öffnung 3.3c des Abschneiders 3c und in die Ausnehmung 2.13c des Ambosses 2.1c eingeführt wird. Nach erfolgter Crimpung der ersten Ader wird das Kabel um 180° gedreht und die zweite Ader entsprechend gecrimpt. Wenngleich in der Figur 7a kein Kraftsensor dargestellt ist, so kann auch hier eine Kraftmessung durchgeführt werden.

In den Figuren 8a und 8b ist gemäß einem fünften Ausführungsbeispiel der Erfindung eine Vorrichtung zum Abisolieren von Adern 5.1 bis 5.4 eines mehradrigen Kabels 5 dargestellt. Die Vorrichtung umfasst als erstes Werkzeug ein erstes Messer 10, welches mit einem zweiten Werkzeug, hier als zweites Messer 20 bezeichnet, zusammenwirkt.

Das erste Messer 10 und das zweite Messer 20 sind einteilig ausgestaltet und umfassen gemäß der Figur 8c jeweils zwei in x-Richtung zueinander versetzt angeordnete Einbuchtungen 10.21, 10.22, 20.21, 20.22.

Die Messer 10, 20 weisen jeweils ein Paar von Ausnehmungen 10.13, 20.13 auf. Im vorgestellten fünften Ausführungsbeispiel sind die Ausnehmungen 10.13, 20.13 als abgerundete Rechtecke ausgestaltet, welche das jeweilige Messer 10, 20 in y-Richtung vollständig durchdringen. Die Ausnehmungen 10.13, 20.13 sind hier überdies symmetrisch unterhalb und oberhalb, also jeweils symmetrisch in z-Richtung versetzt, bezüglich der jeweiligen Einbuchtung 20.11, 20.21 beider Messer 10, 20 angeordnet. Ferner sind die Messer 10, 20 mit in z-Richtung relativ zueinander beweglichen Backen 11, 21 verbunden.

Wenn nun die vier Adern 5.1 bis 5.4 des Kabels 5 abisoliert werden sollen, so wird dies in zwei Stufen vorgenommen. Beispielsweise werden zunächst die Adern 5.1 und 5.2 abisoliert und dann die Adern 5.3 und 5.4. Im Zuge einer solchen Bearbeitung wird das Kabel 5 entgegen der y-Richtung (in der Figur 8b von rechts kommend) so platziert, dass die zunächst nicht abzuisolierenden Adern 5.3, 5.4 in die Ausnehmungen 10.13 des ersten Messers 10 eintauchen. Die Ausnehmungen 10.13 sind dabei bezüglich ihrer Ausdehnung in z-Richtung so dimensioniert, dass auch in der Ruhestellung der Messer 10, 20 die Enden der zunächst nicht abzuisolierenden Adern 5.3, 5.4 in die Ausnehmungen 10.13 einführbar sind. Diejenigen Adern 5.1, 5.2, die im ersten Schritt abisoliert werden sollen, werden zwischen den Messer 10, 20 platziert, so dass ein vergleichsweise geringer Überstand von 2,5 mm erreicht wird. Danach wird das Messer 10 in z-Richtung zu den Adern 5.1, 5.2 hin bewegt. Dabei findet auch eine Relativbewegung zwischen den nicht abzuisolierenden Adern 5.3, 5.4 und dem Messer 10 statt, wobei die nicht abzuisolierenden Adern 5.3, 5.4 in den Ausnehmungen 10.13 verbleiben. Die Messer 10, 20 schneiden dann in die Isolierung der Adern 5.1, 5.2 so tief ein, dass diese das Kupfer der Adern 5.1, 5.2 noch nicht berühren, beispielsweise wird eine Schnitttiefe von 75% der Isolierungswandstärke eingestellt. Danach bewegten sich die Messer 10, 20 in z-Richtung wieder geringfügig von den Adern 5.1, 5.2 weg, so dass die Messer 10, 20 noch innerhalb der Isolierung der Adern 5.1, 5.2 verbleiben. Als nächstes werden dann die beweglichen Backen 11, 21 entgegen der y-Richtung (Figuren 8a, 8b) verschoben, so dass die angeschnittenen Isollerungsenden abgezogen werden. Danach werden Messer 10, 20 weiter in z-Richtung auseinander gefahren. Die beweglichen Backen 11, 21 werden schließlich entgegen der z-Richtung (in der Figur 8b nach oben) gelichermaßen bewegt, so dass die Öffnungen zwischen den Einbuchtungen 10.21, 10.22, 20.21, 20.22 auf gleicher Höhe liegen wie die Adern 5.3. 5.4, welche im ersten Schritt noch nicht abisoliert wurden. Im gesamten Abisolierprozess bleibt also das Kabel 5 ortsfest. Nun können analog zum Vorgehen wie bei den Adern 5.1, 5.2 auch die zur Abisolierung verbleibenden Adern 5.3, 5.4 abisoliert werden. Die bereits abisolierten Enden der Adern 5.1, 5.2 werden dann von den Ausnehmungen 20.13 aufgenommen.

Selbstverständlich umfasst die Erfindung auch die Kombination von einzelnen Elementen der verschiedenen Ausführungsbeispiele. Beispielsweise kann eine Crimpung der vier Adern 5.1 bis 5.4 unter sequentieller Verwendung der Vorrichtungen gemäß dem dritten und dem ersten Ausführungsbeispiel vorgenommen werden. Entsprechend kann die Anordnung gemäß der Figur 6a als eine Crimpstation und diejenige gemäß der Figur 1a als eine andere Crimpstation innerhalb einer umfassenden Vorrichtung zum Crimpen eines mehradrigen Kabels 5 gesehen werden. In diesem Fall werden zunächst in einer ersten Phase mit der Crimpstation entsprechend der Figur 6a (drittes Ausführungsbeispiel) die unteren Adern 5.3, 5.4 gecrimpt, während die oberen Adern 5.1, 5.2 in die Ausnehmungen 1.13, 1.23 der Stempel 1.1b, 1.2b (Figuren 6b, 6c) eingeführt werden. In der Figur 6a ist eine Stellung des Stempels 1b gezeigt, wie sie während des Crimpens vorliegt, also in der Crimp- bzw. Bearbeitungsposition. Dabei kann naturgemäß in der Bearbeitungsposition die Anzahl der Geraden g, die durch die Einbuchtungen 1.11b, 2.11b; 1.21b, 2.21b verlaufen auf zwei reduziert werden.

Nach der ersten Phase wird das Kabel 5 mit den gecrimpten Adern 5.3, 5.4 mit Hilfe einer Transfereinheit der anderen Crimpstation gemäß dem ersten Ausführungsbeispiel, wie in der Figur 1a dargestellt, zugeführt ohne dass eine Drehung des Kabels 5 um die y-Achse vorgenommen wird. Dort werden in einer zweiten Phase die oberen Adern 5.1, 5.2 gecrimpt, während die bereits gecrimpten Adern 5.3, 5.4 in die Ausnehmungen 2.13, 2.23 der Ambossteile 2.1, 2.2 eintauchen.

Durch die Verwendung von zwei Crimpstationen kann überdies auf einfache Weise eine Kabelkonfektionierung mit zwei unterschiedlichen Crimplaschen 6.1 vorgenommen werden. Beispielsweise kann bei einem Kabel 5 für einen gewinkelten Stecker ein äußeres Paar der Adern 5.1, 5.2 mit zwei längeren Crimplaschen 6.1 bestückt werden, wogegen dann an einem inneren Paar von Adern 5.3, 5.4 kürzere Crimplaschen 6.2 befestigt werden können.

## Patentansprüche

1. Vorrichtung zum Crimpen oder Abisolieren einer Ader (5.1, 5.2) eines mehradrigen Kabels (5), umfassend ein erstes Werkzeug (1, 1b, 10) und ein zweites Werkzeug (2, 2b, 20), wobei zum Crimpen oder Abisolieren der Ader (5.1, 5.2) das erste Werkzeug (1, 1b, 10) in einer z-Richtung relativ zum zweiten Werkzeug (2, 2b, 20) in eine Bearbeitungsposition bewegbar ist, **gekennzeichnet dadurch, daß** die Vorrichtung so konfiguriert ist, dass diese einen Freiraum (1.13, 1.23; 2.13, 2.23; 2.13c; 10.13, 20.13) aufweist, in den in der Bearbeitungsposition eine weitere Ader (5.3, 5.4) aufnehmbar ist, und welcher in der z-Richtung versetzt zur ersten Ader (5.1, 5.2) angeordnet ist.

2. Vorrichtung gemäß dem Anspruch 1, wobei der Freiraum (2.13, 2.23; 2.13c; 20.13) als eine Ausnehmung im zweiten Werkzeug (2, 20) ausgestaltet ist.

3. Vorrichtung gemäß dem Anspruch 1 oder 2, wobei der Freiraum (1.13, 1.23; 10.13) als eine Ausnehmung im ersten Werkzeug (1b, 10) ausgestaltet ist.

4. Vorrichtung gemäß einem der vorhergehenden Anspruche, wobei zum simultanen Crimpen oder Abisolieren zweier Adern (5.1, 5.2) des mehradrigen Kabels (5) das erste Werkzeug (1, 1b, 10) und / oder das zweite Werkzeug (2, 2b, 20) zwei Einbuchtungen (1.11, 1.21; 1.11b, 1.21b; 10.21, 10.22; 2.11, 2.21; 2.11b; 20.21, 20.22) aufweisen, so dass das betreffende Werkzeug (1, 1b; 2, 2b; 10, 20) von Geraden (g), welche in einer y-Richtung orientiert sind, durch diese Einbuchtungen (1.11, 1.21; 1.11b, 1.21b; 10.21, 10.22; 2.11, 2.21; 2.11b; 20.21, 20.22) hindurch durchdringbar sind, wobei die zwei Einbuchtungen (1.11, 1.21; 1.11b, 1.21b; 10.21, 10.22; 2.11, 2.21; 2.11b; 20.21, 20.22) in einer x-Richtung zueinander versetzt angeordnet sind, wobei die x-Richtung mit einer Richtungskomponente orthogonal zu den y- und z-Richtungen orientiert ist.

5. Vorrichtung gemäß einem Ansprüche 2 bis 4, wobei zur simultanen Aufnahme zweier Adern (5.1, 5.2) des mehradrigen Kabels (5) das erste Werkzeug (1, 1b, 10) oder das zweite Werkzeug (2, 2b, 20) zwei als Ausnehmungen ausgestaltete Freiräume (1.13, 1.23; 2.13, 2.23; 2.13c; 10.13, 20.13) aufweist, so dass das betreffende Werkzeug (1, 1b, 10; 2, 2b, 20) von Geraden (h), welche in einer y-Richtung orientiert sind, durch diese Freiräume (1.13, 1.23; 2.13, 2.23; 2.13c; 10.13, 20.13) hindurch durchdringbar sind, wobei die zwei Freiräume (1.13, 1.23; 2.13, 2.23; 2.13c; 10.13, 20.13) in einer x-Richtung zueinander versetzt angeordnet sind, wobei die x-Richtung mit einer Richtungskomponente orthogonal zu den y- und z-Richtungen orientiert ist.

6. Vorrichtung gemäß einem der vorhergehenden Ansprüche, wobei die Vorrichtung ein Führungselement (3.1, 3.2; 3.1a, 3.2a; 3.1b, 3.2b; 3.1c) aufweist, zur Leitung der jeweiligen Ader (5.1 bis 5.4) in eine vorgegebene Position.

7. Vorrichtung gemäß einem der vorhergehenden Ansprüche, wobei die Vorrichtung zwei Führungselemente (3.1, 3.2; 3.1a, 3.2a; 3.1b, 3.2b) aufweist, zur Leitung der jeweiligen Ader (5.1 bis 5.4) in eine vorgegebene Position, wobei das erste Führungselement (3.1; 3.1a; 3.1b) mit einer orthogonalen Richtungskomponente relativ zum zweiten Führungselement (3.2; 3.2a; 3.2b) orientiert ist.

8. Vorrichtung gemäß einem der Ansprüche 6 oder 7, wobei das Führungselement (3.1, 3.2; 3.1a, 3.2a; 3.1b, 3.2b; 3.1c) keilförmig ausgestaltet ist zur Leitung der jeweiligen Ader (5.1 bis 5.4) in eine vorgegebene Position.

9. Vorrichtung gemäß einem der Ansprüche 6 bis 8, wobei die Vorrichtung zum Crimpen der Adern (5.1 bis 5.4) geeignet ist und eines der Führungselemente (3.1; 3.1a; 3.1b, 3.1c) einen Schlitz (3.4; 3.4a; 3.4b; 3.4c) zur Aufnahme eines Trägerstreifens 6 aufweist.

10. Vorrichtung gemäß einem der vorhergehenden Ansprüche, wobei die Vorrichtung zum Crimpen der Adern (5.1 bis 5.4) geeignet ist und das zweite Werkzeug (2, 2b) zwei Teile (2.1, 2.2; 2.1b, 2.2b) umfasst, welche relativ zueinander in z-Richtung verschieblich angeordnet sind und auf jeweils auf einem Kraftsensor (4.1, 4.2) ruhen.

11. Vorrichtung gemäß einem der vorhergehenden Ansprüche, wobei die Vorrichtung zum Crimpen der Adern (5.1 bis 5.4) geeignet ist und der Freiraum (2.13, 2.23; 2.13c; 20.13) als eine Ausnehmung im zweiten Werkzeug (2, 20) ausgestaltet ist und einen Abschneider (3, 3a, 3b, 3c) aufweist, welcher eine Öffnung (3.3, 3.3a, 3.3b, 3.3c) umfasst und der Abschneider (3, 3a, 3b, 3c) relativ zum zweiten Werkzeug (2) so angeordnet ist, dass der als Ausnehmung ausgestaltete Freiraum (2.13, 2.23; 2.13c) und die Öffnung (3.3, 3.3a, 3.3b, 3.3c) von einer Geraden (h), welche in einer y-Richtung orientiert ist, durchdringbar sind.

12. Vorrichtung gemäß dem Anspruch 11, wobei der Abschneider (3, 3a, 3b, 3c) ein Führungselement (3.1, 3.2; 3.1a, 3.2a; 3.1b, 3.2b; 3.1c) aufweist zur Leitung der jeweiligen Ader (5.1 bis 5.4) in eine vorgegebene Position.

13. Vorrichtung gemäß dem Anspruch 11 oder 12, wobei durch das Führungselement (3.1, 3.2; 3.1a, 3.2a; 3.1b, 3.2b; 3.1c) eine Ader (5.1 bis 5.4) in einen als Ausnehmung ausgestalteten Freiraum (2.13, 2.23; 2.13c) und eine andere Ader (5.1 bis 5.4) in die Einbuchtung (2.11, 2.21; 2.11 b) des zweiten Werkzeugs (2) leitbar ist.

14. Vorrichtung gemäß dem Anspruch 11, 12 oder 13, wobei das zweite Werkzeug (2)
- zwei als Ausnehmungen ausgestalteten Freiräume (2.13, 2.23), und
- zwei Einbuchtungen (2.11, 2.21; 2.11b) aufweist, und
der Abschneider (3, 3a, 3b, 3c) zwei Führungselemente (3.1, 3.2; 3.1a, 3.2a; 3.1b, 3.2b) aufweist zur Leitung einer Ader (5.1 bis 5.4) in die Freiräume (2.13, 2.23) und zur Leitung einer anderen Ader in die Einbuchtungen (2.11, 2.21; 2.11b) des zweiten Werkzeugs (2), wobei das erste Führungselement (3.1; 3.1a; 3.1b) mit einer orthogonalen Richtungskomponente relativ zum zweiten Führungselement (3.2: 3.2a; 3.2b) orientiert ist.

15. Vorrichtung gemäß einem der vorhergehenden Ansprüche, wobei die Vorrichtung zum Crimpen der ersten und der weiteren Ader (5.1 bis 5.4) geeignet ist und zwei Crimpstationen umfasst, wobei jede der Crimpstationen ein erstes Werkzeug (1, 1b) und ein zweites Werkzeug (2, 2b) aufweist und zum Crimpen einer der Adern (5.1, 5.2, 5.3, 5.4) das jeweilige erste Werkzeug (1, 1b) in der z-Richtung relativ zum jeweiligen zweiten Werkzeug (2, 2b) in eine Bearbeitungsposition bewegbar ist, und
- die eine Crimpstation zum Crimpen der ersten Ader (5.1, 5.2) so konfiguriert ist, dass diese einen Freiraum (2.13, 2.23; 2.13c) aufweist, der als eine Ausnehmung im zweiten Werkzeug (2) ausgestaltet ist, in den in der Bearbeitungsposition die weitere Ader (5.3, 5.4) aufnehmbar ist, und welcher in der z-Richtung versetzt zur ersten Ader (5.1, 5.2) angeordnet ist,
- die andere Crimpstation zum Crimpen der weiteren Ader (5.3, 5.4) so konfiguriert ist, dass diese einen Freiraum (1.13, 1.23) aufweist, der als eine Ausnehmung im ersten Werkzeug (1b) ausgestaltet ist, in den in der Bearbeitungsposition die erste Ader (5.1, 5.2) aufnehmbar ist, und welcher in der z-Richtung versetzt zur weiteren Ader (5.3, 5.4) angeordnet ist.

## Claims

1. Apparatus for crimping or stripping insulation from a core (5.1, 5.2) of a multicore cable (5), comprising a first tool (1, 1b, 10) and a second tool (2, 2b, 20), wherein, in order to crimp or strip insulation from the core (5.1, 5.2), the first tool (1, 1b, 10) can be moved, relative to the second tool (2, 2b, 20) in a z-direction, to a processing position, **characterized in that** the apparatus is designed such that it has a clearance (1.13, 1.23; 2.13, 2.23; 2.13c; 10.13, 20.13) in which a further core (5.3, 5.4) can be received in the processing position and which is arranged such that it is offset in relation to the first core (5.1, 5.2) in the z-direction.

2. Apparatus according to Claim 1, wherein the clearance (2.13, 2.23; 2.13c; 20.13) is configured as a recess in the second tool (2, 20).

3. Apparatus according to Claim 1 or 2, wherein the clearance (1.13, 1.23; 10.13) is configured as a recess in the first tool (1b, 10).

4. Apparatus according to one of the preceding claims, wherein, in order to simultaneously crimp or strip insulation from two cores (5.1, 5.2) of the multicore cable (5), the first tool (1, 1b, 10) and/or the second tool (2, 2b, 20) have/has two bays (1.11, 1.21; 1.11b, 1.21b; 10.21, 10.22; 2.11, 2.21; 2.11b; 20.21, 20.22), so that straight lines (g), which are oriented in a y-direction, can be passed through the relevant tool (1, 1b; 2, 2b; 10, 20) through these bays (1.11, 1.21; 1.11b, 1.21b; 10.21, 10.22; 2.11, 2.21; 2.11b 20.21, 20.22), wherein the two bays (1.11, 1.21; 1.11b, 1.21b; 10.21, 10.22; 2.11, 2.21; 2.11b; 20.21, 20.22) are arranged such that they are offset in relation to one another in an x-direction, wherein the x-direction is oriented with a direction component orthogonal to the y- and z-directions.

5. Apparatus according to one of Claims 2 to 4, wherein, in order to simultaneously receive two cores (5.1, 5.2) of the multicore cable (5), the first tool (1, 1b, 10) or the second tool (2, 2b, 20) has two clearances (1.13, 1.23; 2.13, 2.23; 2.13c; 10.13, 20.13) which are configured as recesses, so that straight lines (h), which are oriented in a y-direction, can be passed through the relevant tool (1, 1b, 10; 2, 2b, 20) through these clearances (1.13, 1.23; 2.13, 2.23; 2.13c; 10.13, 20.13), wherein the two clearances (1.13, 1.23; 2.13, 2.23; 2.13c; 10.13, 20.13) are arranged such that they are offset in relation to one another in an x-direction, wherein the x-direction is oriented with a direction component orthogonal to the y- and z-directions.

6. Apparatus according to one of the preceding claims, wherein the apparatus has a guide element (3.1, 3.2; 3.1a, 3.2a; 3.1b, 3.2b; 3.1c) for routing the respective core (5.1 to 5.4) into a prespecified position.

7. Apparatus according to one of the preceding claims, wherein the apparatus has two guide elements (3.1, 3.2; 3.1a, 3.2a; 3.1b, 3.2b) for routing the respective core (5.1 to 5.4) into a prespecified position, wherein the first guide element (3.1; 3.1a; 3.1b) is oriented with an orthogonal direction component relative to the second guide element (3.2; 3.2a; 3.2b).

8. Apparatus according to either of Claims 6 and 7, wherein the guide element (3.1, 3.2; 3.1a, 3.2a; 3.1b, 3.2b; 3.1c) is configured in a wedge shape for routing the respective core (5.1 to 5.4) into a prespecified position.

9. Apparatus according to one of Claims 6 to 8, wherein the apparatus is suitable for crimping the cores (5.1 to 5.4), and one of the guide elements (3.1; 3.1a; 3.1b; 3.1c) has a slot (3.4; 3.4a; 3.4b; 3.4c) for holding a carrier strip (6).

10. Apparatus according to one of the preceding claims, wherein the apparatus is suitable for crimping the cores (5.1 to 5.4), and the second tool (2, 2b) comprises two parts (2.1, 2.2; 2.1b, 2.2b) which are arranged such that they can be displaced relative to one another in the z-direction and in each case rest on a force sensor (4.1, 4.2).

11. Apparatus according to one of the preceding claims, wherein the apparatus is suitable for crimping the cores (5.1 to 5.4), and the clearance (2.13, 2.23; 2.13c; 20.13) is configured as a recess in the second tool (2, 20) and has a cutter (3, 3a, 3b, 3c) which comprises an opening (3.3, 3.3a, 3.3b, 3.3c), and the cutter (3, 3a, 3b, 3c) is arranged relative to the second tool (2) such that a straight line (h), which is oriented in a y-direction, can pass through the clearance (2.13, 2.23; 2.13c), which is configured as a recess, and the opening (3.3, 3.3a, 3.3b, 3.3c).

12. Apparatus according to Claim 11, wherein the cutter (3, 3a, 3b, 3c) has a guide element (3.1, 3.2; 3.1a, 3.2a; 3.1b, 3.2b; 3.1c) for routing the respective core (5.1 to 5.4) into a prespecified position.

13. Apparatus according to Claim 11 or 12, wherein a core (5.1 to 5.4) can be routed into a clearance (2.13, 2.23; 2.13c) which is configured as a recess, and another core (5.1 to 5.4) can be routed into the bay (2.11, 2.21; 2.11b) in the second tool (2) by the guide element (3.1, 3.2; 3.1a, 3.2a; 3.1b, 3.2b; 3.1c).

14. Apparatus according to Claim 11, 12 or 13, wherein the second tool (2) has
- two clearances (2.13, 2.23) which are configured as recesses, and
- two bays (2.11, 2.21; 2.11b), and
the cutter (3, 3a, 3b, 3c) has two guide elements (3.1, 3.2; 3.1a, 3.2a; 3.1b, 3.2b) for routing a core (5.1 to 5.4) into the clearances (2.13, 2.23) and for routing another core into the bays (2.11, 2.21; 2.11b) of the second tool (2), wherein the first guide element (3.1; 3.1a; 3.1b) is oriented with an orthogonal direction component relative to the second guide element (3.2; 3.2a; 3.2b).

15. Apparatus according to one of the preceding claims, wherein the apparatus is suitable for crimping the first and the further cores (5.1 to 5.4) and comprises two crimping stations, wherein each of the crimping stations has a first tool (1, 1b) and a second tool (2, 2b) and, in order to crimp one of the cores (5.1, 5.2, 5.3, 5.4), the respective first tool (1, 1b) can be moved, relative to the respective second tool (2, 2b) in the z-direction, into a processing position, and
- the crimping station for crimping the first core (5.1, 5.2) is designed such that it has a clearance (2.13, 2.23; 2.13c) which is configured as a recess in the second tool (2) and in which the further core (5.3, 5.4) can be held, in the processing position, and which is arranged such that it is offset in relation to the first core (5.1, 5.2) in the z-direction,
- the other crimping station for crimping the further core (5.3, 5.4) is designed such that it has a clearance (1.13, 1.23) which is configured as a recess in the first tool (1b) and in which the first core (5.1, 5.2) can be held, in the processing position, and which is arranged such that it is offset in relation to the further core (5.3, 5.4) in the z-direction.

## Revendications

1. Dispositif de sertissage ou de dénudement d'un conducteur (5.1, 5.2) d'un câble (5) à plusieurs conducteurs, comprenant un premier outil (1, 1b, 10) et un deuxième outil (2, 2b, 20), le premier outil (1, 1b, 10), pour le sertissage ou le dénudement des conducteurs (5.1, 5.2), pouvant être déplacé dans une direction z par rapport au deuxième outil (2, 2b, 20) dans une position d'usinage, **caractérisé en ce que** le dispositif est configuré de telle sorte que celui-ci présente un espace libre (1.13, 1.23 ; 2.13, 2.23 ; 2.13c ; 10.13, 20.13) dans lequel, dans la position d'usinage, un conducteur supplémentaire (5.3, 5.4) peut être reçu, et lequel est disposé de manière décalée dans la direction z par rapport au premier conducteur (5.1, 5.2).

2. Dispositif selon la revendication 1, dans lequel l'espace libre (2.13, 2.23 ; 2.13c ; 20.13) est configuré sous forme d'un évidement dans le deuxième outil (2, 20).

3. Dispositif selon la revendication 1 ou 2, dans lequel l'espace libre (1.13, 1.23 ; 10.13) est configuré sous forme d'un évidement dans le premier outil (1b, 10).

4. Dispositif selon l'une quelconque des revendications précédentes, dans lequel, pour le sertissage ou le dénudement simultané de deux conducteurs (5.1, 5.2) du câble (5) à plusieurs conducteurs, le premier outil (1, 1b, 10) et/ou le deuxième outil (2, 2b, 20) présentent deux renfoncements (1.11, 1.21 ; 1.11b, 1.21b ; 10.21, 10.22 ; 2.11, 2.21 ; 2.11b ; 20.21, 20.22) de telle sorte que l'outil concerné (1, 1b ; 2, 2b ; 10, 20) puisse être traversé par des droites (g) qui sont orientées dans une direction y, à travers ces renfoncements (1.11, 1.21 ; 1.11b, 1.21b ; 10.21, 10.22 ; 2.11, 2.21 ; 2.11b ; 20.21, 20.22), les deux renfoncements (1.11, 1.21 ; 1.11b, 1.21b ; 10.21, 10.22 ; 2.11, 2.21 ; 2.11b ; 20.21, 20.22) étant disposés de manière décalée l'un par rapport à l'autre dans une direction x, la direction x étant orientée avec une composante directionnelle perpendiculaire aux directions y et z.

5. Dispositif selon l'une quelconque des revendications 2 à 4, dans lequel, pour recevoir simultanément deux conducteurs (5.1, 5.2) du câble (5) à plusieurs conducteurs, le premier outil (1, 1b, 10) ou le deuxième outil (2, 2b, 20) présente deux espaces libres (1.13, 1.23 ; 2.13, 2.23 ; 2.13c ; 10.13, 20.13) configurés sous forme d'évidements, de telle sorte que l'outil concerné (1, 1b, 10 ; 2, 2b, 20) puisse être traversé par des droites (h), qui sont orientées dans une direction y, à travers ces espaces libres (1.13, 1.23 ; 2.13, 2.23 ; 2.13c ; 10.13, 20.13), les deux espaces libres (1.13, 1.23 ; 2.13, 2.23 ; 2.13c ; 10.13, 20.13) étant disposés de manière décalée l'un par rapport à l'autre dans une direction x, la direction x étant orientée avec une composante directionnelle perpendiculaire aux directions y et z.

6. Dispositif selon l'une quelconque des revendications précédentes, dans lequel le dispositif présente un élément de guidage (3.1, 3.2 ; 3.1a, 3.2a ; 3.1b, 3.2b ; 3.1c) pour guider le conducteur respectif (5.1 à 5.4) dans une position prédéfinie.

7. Dispositif selon l'une quelconque des revendications précédentes, dans lequel le dispositif présente deux éléments de guidage (3.1, 3.2 ; 3.1a, 3.2a ; 3.1b, 3.2b) pour guider le conducteur respectif (5.1 à 5.4) dans une position prédéfinie, le premier élément de guidage (3.1 ; 3.1a ; 3.1b) étant orienté avec une composante directionnelle perpendiculaire par rapport au deuxième élément de guidage (3.2 ; 3.2a ; 3.2b).

8. Dispositif selon l'une quelconque des revendications 6 ou 7, dans lequel l'élément de guidage (3.1, 3.2 ; 3.1a, 3.2a ; 3.1b, 3.2b ; 3.1c) est configuré en forme de clavette pour guider le conducteur respectif (5.1 à 5.4) dans une position prédéfinie.

9. Dispositif selon l'une quelconque des revendications 6 à 8, dans lequel le dispositif est prévu pour sertir les conducteurs (5.1 à 5.4) et l'un des éléments de guidage (3.1 ; 3.1a ; 3.1b ; 3.1c) présente une fente (3.4 ; 3.4a ; 3.4b ; 3.4c) pour recevoir une bande de support (6).

10. Dispositif selon l'une quelconque des revendications précédentes, dans lequel le dispositif est prévu pour sertir les conducteurs (5.1 à 5.4) et le deuxième outil (2, 2b) comprend deux parties (2.1, 2.2 ; 2.1b, 2.2b) qui sont disposées de manière déplaçable l'une par rapport à l'autre dans la direction z et qui reposent sur un capteur de force respectif (4.1, 4.2).

11. Dispositif selon l'une quelconque des revendications précédentes, dans lequel le dispositif est prévu pour sertir les conducteurs (5.1 à 5.4) et l'espace libre (2.13, 2.23 ; 2.13c ; 20.13) est configuré sous forme d'évidement dans le deuxième outil (2, 20) et présente un dispositif de coupe (3, 3a, 3b, 3c) qui comprend une ouverture (3.3, 3.3a, 3.3b, 3.3c), et le dispositif de coupe (3, 3a, 3b, 3c) est disposé par rapport au deuxième outil (2) de telle sorte que l'espace libre (2.13, 2.23 ; 2.13c) configuré sous forme d'évidement et l'ouverture (3.3, 3.3a, 3.3b, 3.3c) puissent être traversés par une droite (h) qui est orientée dans une direction y.

12. Dispositif selon la revendication 11, dans lequel le dispositif de coupe (3, 3a, 3b, 3c) présente un élément de guidage (3.1, 3.2 ; 3.1a, 3.2a ; 3.1b, 3.2b ; 3.1c) pour guider le conducteur respectif (5.1 à 5.4) dans une position prédéfinie.

13. Dispositif selon la revendication 11 ou 12, dans lequel un conducteur (5.1 à 5.4) peut être guidé par travers l'élément de guidage (3.1, 3.2 ; 3.1a, 3.2a ; 3.1b, 3.2b ; 3.1c) dans un espace libre (2.13, 2.23 ; 2.13c) configuré sous forme d'évidement et un autre conducteur (5.1 à 5.4) peut être guidé dans le renfoncement (2.11, 2.21 ; 2.11b) du deuxième outil (2).

14. Dispositif selon la revendication 11, 12 ou 13, dans lequel le deuxième outil (2) présente
- deux espaces libres (2.13, 2.23) configurés sous forme d'évidements et
- deux renfoncements (2.11, 2.21 ; 2.11b), et
le dispositif de coupe (3, 3a, 3b, 3c) présente deux éléments de guidage (3.1, 3.2 ; 3.1a, 3.2a ; 3.1b, 3.2b) pour guider un conducteur (5.1 à 5.4) dans les espaces libres (2.13, 2.23) et pour guider un autre conducteur dans les renfoncements (2.11, 2.21 ; 2.11b) du deuxième outil (2), le premier élément de guidage (3.1 ; 3.1a ; 3.1b) étant orienté avec une composante directionnelle perpendiculaire par rapport au deuxième élément de guidage (3.2 ; 3.2a ; 3.2b).

15. Dispositif selon l'une quelconque des revendications précédentes, dans lequel le dispositif est prévu pour sertir le premier conducteur et le conducteur supplémentaire (5.1 à 5.4) et comprend deux postes de sertissage, chacun des postes de sertissage présentant un premier outil (1, 1b) et un deuxième outil (2, 2b) et pour le sertissage de l'un des conducteurs (5.1, 5.2, 5.3, 5.4), le premier outil respectif (1, 1b) pouvant être déplacé dans une position d'usinage dans la direction z par rapport au deuxième outil respectif (2, 2b), et
- l'un des postes de sertissage est configuré pour sertir le premier conducteur (5.1, 5.2) de telle sorte que celui-ci présente un espace libre (2.13, 2.23 ; 2.13c) qui est configuré en tant qu'évidement dans le deuxième outil (2), dans lequel peut être reçu le conducteur supplémentaire (5.3, 5.4) dans la position d'usinage, et qui est disposé dans la direction z de manière décalée par rapport au premier conducteur (5.1, 5.2),
- l'autre poste de sertissage est configuré pour sertir le conducteur supplémentaire (5.3, 5.4) de telle sorte que celui-ci présente un espace libre (1.13, 1.23) qui est configuré sous forme d'évidement dans le premier outil (1b), dans lequel peut être reçu le premier conducteur (5.1, 5.2) dans la position d'usinage, et qui est disposé dans la direction z de manière décalée par rapport au conducteur supplémentaire (5.3, 5.4).
